# EUROPEAN PATENT APPLICATION

(11) **EP 4 749 460 A1**
(43) Date of publication of application: **27.05.2026**
(21) Application number: 24844329.3
(22) Date of filing: 11.05.2024
(51) Int. Cl.: G06F 9/54

(54) **DATA COMMUNICATION METHOD AND APPARATUS, AND ELECTRONIC DEVICE, STORAGE MEDIUM AND SYSTEM**

(30) Priority: 27.07.2023 CN 202310936120
(71) Applicant: Contemporary Amperex Future Energy Research Institute (Shanghai) Limited, Shanghai 201100 (CN); Contemporary Amperex Technology Co., Limited, Ningde, Fujian 352100 (CN)
(72) Inventor: LU, Yanhua, Shanghai 201100 (CN)
(74) Representative: Gong, Jinping
(86) International application number: PCT/CN2024/092617
(87) International publication number: WO 2025/020633

(57) **Abstract**

This application provides a data communication method and apparatus, an electronic device, a storage medium, and a system. The method includes: obtaining a data block of an application, where the data block includes communication data and communication driver information; storing the data block into a data block queue after obtaining the data block; and sending the communication data corresponding to the data block in the data block queue to a target communication driver corresponding to the communication driver information based on a scheduling policy. In the embodiments of this application, to-be-transmitted data generated by applications is uniformly scheduled, improving data transmission stability and thereby improving system operation stability.

## Description

### CROSS-REFERENCE TO RELATED APPLICATIONS

This application claims priority to the Chinese Patent Application No. 202310936120.1, filed on July 27, 2023 and entitled "DATA COMMUNICATION METHOD AND APPARATUS, ELECTRONIC DEVICE, STORAGE MEDIUM, AND SYSTEM", which is incorporated herein by reference in its entirety.

### TECHNICAL FIELD

This application relates to the technical field of data processing, specifically to a data communication method and apparatus, an electronic device, a storage medium, and a system.

### BACKGROUND

As business systems expand, requirements for higher performance increase, and thus requirements for communication data volume and real-time communication between modules within the business systems have significantly risen. In conventional communication architectures, application layers in business systems store to-be-transmitted data into a cache, and communication drivers send the data based on availability of their interfaces.

If a module generates a large amount of data, a corresponding communication driver continuously occupies CPU resources, which may prevent data from other modules from being sent in a timely manner, potentially leading to instability in a business system.

### SUMMARY

The embodiments of this application aim to provide a data communication method and apparatus, an electronic device, a storage medium, and a system to uniformly schedule data to be transmitted by applications, thereby improving system stability.

In a first aspect, an embodiment of this application provides a data communication method, including:
obtaining a data block of an application, where the data block includes communication data and communication driver information;
storing the data block into a data block queue after obtaining the data block; and
sending the communication data corresponding to the data block in the data block queue to a target communication driver corresponding to the communication driver information based on a scheduling policy.

In this embodiment of this application, to-be-transmitted data generated by the applications is stored into the data block queue in the form of data block for unified scheduling. Compared with existing solutions where applications directly communicate data with communication drivers and the communication drivers contend for CPU resources, in the method in this embodiment of this application, communication data corresponding to data blocks in the data block queue is orderly sent to corresponding target communication drivers based on the scheduling policy. This reduces instances where communication drivers contend for CPU resources based on their priorities, enabling timely processing of communication data, improving data transmission stability, and thereby improving system operation stability.

In any embodiment, during storage of the data block into the data queue, the data block may be stored into a data queue of a corresponding priority based on priority information.

In this embodiment of this application, the data block is stored based on the priority information, enabling prioritized processing of high-priority data, orderly processing of data, and improving system stability.

In any embodiment, the sending the communication data corresponding to the data block in the data block queue to a target communication driver corresponding to the communication driver information based on a scheduling policy includes:
obtaining a to-be-processed data block from a data queue based on a priority of the data queue; and
sending the communication data corresponding to the to-be-processed data block to the target communication driver corresponding to the communication driver information.

In this embodiment of this application, the data block is processed based on the priority of the data queue, enabling prioritized processing of high-priority data, improving the orderliness of data processing, and thereby improving system operation stability.

In any embodiment, the sending the communication data corresponding to the to-be-processed data block to the target communication driver corresponding to the communication driver information includes:
if a working state of the target communication driver is an idle state, sending the communication data corresponding to the to-be-processed data block to the target communication driver; and/or
if the working state of the target communication driver is a busy state, returning the to-be-processed data block to an original data queue, and obtaining a next to-be-processed data block from the data queue based on the priority of the data queue; and
if a working state of a target communication driver corresponding to the next to-be-processed data block is an idle state, sending communication data corresponding to the next to-be-processed data block to the target communication driver corresponding to the next to-be-processed data block.

In this embodiment of this application, determining whether to send the communication data to the target communication driver based on the busy or idle state of the target communication driver improves a success rate of communication data sending.

In any embodiment, the sending the communication data corresponding to the to-be-processed data block to the target communication driver corresponding to the communication driver information includes:
calculating a cumulative duration of a duration required for a sent data block in a data sending time segment corresponding to a current moment and an estimated duration required for the to-be-processed data block; where the data sending time segment is a time period for sending a data block obtained through pre-dividing time; and
if the cumulative duration is less than the data sending time segment corresponding to the current moment, sending the communication data corresponding to the to-be-processed data block to the target communication driver corresponding to the communication driver information.

In this embodiment of this application, time is pre-divided to obtain multiple time segments. Corresponding operations are performed within different time segments, to distribute short-term transmission of multiple pieces of data or continuous burst communication data to multiple time segments for processing, improving data transmission stability, and thereby improving system operation stability.

In any embodiment, after the sending the communication data corresponding to the to-be-processed data block to the target communication driver corresponding to the communication driver information, the method further includes:
updating the duration required for sent data based on the estimated sending duration.

In this embodiment of this application, since a size of the data sending time segment is fixed while a time required for sending a piece of communication data is not fixed, the cumulative duration for sent data can be tracked to facilitate determining whether to terminate the data sending operation.

In any embodiment, the method further includes:
pre-setting a time slot for triggering an interrupt, where the time slot is a time interval between two consecutive interrupts; and
dividing the time slot according to a preset division rule to obtain multiple time sub-slots, where different time sub-slots are used to perform different data operations.

In this embodiment of this application, interrupts divide time into multiple time slots through and each time slot is further divided into multiple time sub-slots, specifying corresponding data operations in different time sub-slots, reducing the impact of data transmission on task execution.

In any embodiment, the time sub-slots include: a data receiving time segment, a data processing time segment, and a data sending time segment.

In this embodiment of this application, a data receiving operation is performed in a data receiving time segment, data processing is performed in a data processing time segment, and data sending is performed in a data sending time segment, reducing the impact of the data transmission process on task execution and improving stability during data transmission.

In any embodiment, protection time periods are set before and after the data receiving time segment, the data processing time segment, and the data sending time segment.

In this embodiment of this application, a risk of processing timeout is reduced by setting protection time periods.

In any embodiment, the method further includes:
if a first data queue has a target to-be-processed data block with a waiting duration greater than a preset waiting duration, migrating the target to-be-processed data block from the first data queue to a second data queue, where a priority of the first data queue is lower than a priority of the second data queue.

In this embodiment of this application, a priority of a data block that is not processed for a long time is increased, reducing a possibility that data remains unprocessed for a long time.

In any embodiment, the method further includes:
obtaining to-be-received data from the communication driver and sending the to-be-received data to a corresponding application.

In this embodiment of this application, data obtained from the communication driver is sent to a corresponding application. In this embodiment of this application, this reduces the impact on task execution, compared with existing solutions in which an interrupt occurs for data receiving whenever data is available.

In a second aspect, an embodiment of this application provides another data communication method, including:
receiving a data block sent by an application layer, where the data block includes communication data and communication driver information;
storing the data block into a data block queue; and
if a current moment is within a data sending time segment, obtaining a to-be-processed data block from the data block queue, and sending the communication data corresponding to the data block in the data block queue to a target communication driver corresponding to the communication driver information based on a scheduling policy; where the data sending time segment is a time period for sending a data block obtained through pre-dividing time.

In this embodiment of this application, to-be-transmitted data generated by applications is uniformly scheduled, improving data transmission stability and thereby improving system operation stability.

In a third aspect, an embodiment of this application provides a data communication apparatus, including:
a data block obtaining module, configured to obtain a data block of an application, where the data block includes communication data and communication driver information;
a caching module, configured to store the data block into a data block queue; and
a sending module, configured to send the data block corresponding to the data block in the data block queue to a target communication driver corresponding to the communication driver information based on a scheduling policy.

In a fourth aspect, an embodiment of this application provides an electronic device, including: a processor, a memory, and a bus, where
the processor and the memory communicate with each other through the bus; and
the memory stores program instructions executable by the processor, and the processor invokes the program instructions to perform the method according to the first aspect or the second aspect.

In a fifth aspect, an embodiment of this application provides a non-transitory computer-readable storage medium, including:
the non-transitory computer-readable storage medium stores computer instructions, where the computer instructions enable a computer to perform the method according to the first aspect or the second aspect.

In a sixth aspect, an embodiment of this application provides a data communication system, including an application layer, a communication scheduling layer, and a driver layer; where
the application layer includes an application, where the application is configured to generate a data block and send the data block to the communication scheduling layer;
the communication scheduling layer is configured to perform the method according to the first aspect; and
the driver layer includes a communication driver, where the communication driver is configured to receive communication data sent by the communication scheduling layer and send the communication data.

In the embodiments of this application, by introducing a communication scheduling layer in the data communication system, the communication scheduling layer uniformly manages the transmission of data generated by applications, thereby reducing the negative impact of short-term high data volume transmission on system operation.

Other features and advantages of this application will be described in the following specification, and some will become apparent from the specification or be understood through the implementation of the embodiments of this application. The objectives and other advantages of this application can be achieved and obtained through the structures specifically indicated in the specification, claims, and drawings.

### DESCRIPTION OF DRAWINGS

To more clearly illustrate the technical solutions of the embodiments of this application, the drawings required for use in the embodiments of this application are briefly introduced below. It should be understood that the following drawings only illustrate certain embodiments of this application and should not be considered as limiting the scope. For those skilled in the art, other related drawings can be obtained based on these drawings without creative effort.
FIG. 1 is a schematic flowchart of a data communication method according to an embodiment of this application;
FIG. 2 is a schematic diagram of a data queue structure according to an embodiment of this application;
FIG. 3 is a schematic diagram of a time slot according to an embodiment of this application;
FIG. 4 is a schematic flowchart of a data sending method according to an embodiment of this application;
FIG. 5 is a schematic flowchart of another data communication method according to an embodiment of this application;
FIG. 6 is a schematic structural diagram of a data communication apparatus according to an embodiment of this application;
FIG. 7 is a schematic structural diagram of an electronic device entity according to an embodiment of this application; and
FIG. 8 is a schematic structural diagram of a data communication system according to an embodiment of this application.

### DESCRIPTION OF EMBODIMENTS

The embodiments of the technical solutions of this application will be described in detail below with reference to the accompanying drawings. The following embodiments are only used to more clearly illustrate the technical solutions of this application and are therefore only examples, not intended to limit the protection scope of this application.

Unless otherwise defined, all technical and scientific terms used herein have the same meaning as commonly understood by those skilled in the art of this application; the terms used herein are for the purpose of describing specific embodiments only and are not intended to limit this application; the terms "include" and "have" and any variations thereof in the specification, claims, and descriptions of the drawings of this application are intended to cover non-exclusive inclusion.

In the description of the embodiments of this application, technical terms such as "first" and "second" are used only to distinguish different objects and should not be understood as indication or implication of relative importance or implication of a quantity, specific order, or primary-secondary relationship of the indicated technical features. In the description of the embodiments of this application, "multiple" means two or more, unless otherwise explicitly and specifically limited.

Reference to an "embodiment" herein means that a particular feature, structure, or characteristic described with reference to the embodiment may be included in at least one embodiment of this application. The appearance of this phrase in various places in the specification does not necessarily refer to the same embodiment, nor is it a separate or alternative embodiment mutually exclusive with other embodiments. Those skilled in the art explicitly and implicitly understand that the embodiments described herein can be combined with other embodiments.

In the description of the embodiments of this application, the term "and/or" merely describes an association relationship between associated objects, indicating that three relationships may exist, for example, "A and/or B" may indicate: An alone, both A and B, and B alone. In addition, the character "/" herein generally indicates an "or" relationship between the associated objects.

In the description of the embodiments of this application, the term "multiple" refers to two or more (including two), similarly, "multiple groups" refers to two or more groups (including two groups), and "multiple pieces" refers to two or more pieces (including two pieces).

In the description of the embodiments of this application, unless otherwise explicitly specified and limited, technical terms such as "mount", "connect", "join", and "fasten" should be understood in a broad sense, for example, may indicate a fixed connection, a detachable connection, or an integral connection; a mechanical connection or an electrical connection; a direct connection or an indirect connection through an intermediate medium; or internal communication between two components or an interaction relationship between two components. For those of ordinary skill in the art, the specific meanings of the above terms in the embodiments of this application can be understood based on specific circumstances.

As automation technology becomes increasingly mature, business systems are indispensable in various industries, with respective business systems in different industries implementing different functions. As business systems expand, requirements for higher performance increase, and thus requirements for communication data volume and real-time communication between modules within the business systems have significantly risen. In conventional communication architectures, application software stores required data into a cache, such as a FIFO memory, and communication drivers read data from the cache and send the data based on availability of their interfaces. Similarly, for data receiving, communication drivers typically transport data to applications after receiving the data from a terminal.

Since communication drivers in a business system operate independently, when a communication driver needs to send or receive data, it occupies a CPU resource for data sending or receiving. During the data sending or receiving by the communication driver, other communication drivers cannot transmit data. If the communication driver needs to send a large amount of data, other communication drivers need to wait, and if data to be transmitted by other drivers has high time sensitivity, the data may not be transmitted in a timely manner, potentially leading to system failures. Additionally, during data receiving, if there is a large amount of data in a short period, frequent interrupts occur according to existing solutions. Typically, interrupts have a higher priority than operating system tasks, potentially interrupting applications frequently and preventing high real-time tasks from being executed in a timely manner, thereby affecting stability of the business system.

To address the above technical problems, the embodiments of this application provide a data communication method and apparatus, an electronic device, a storage medium, and a system. Since data sent by applications is uniformly scheduled, applications do not directly invoke communication drivers for data sending and receiving, thereby improving data transmission stability and consequently improving operation stability of a business system.

It can be understood that the business system provided in the embodiments of this application may specifically be an energy storage valve control system or a system in other application fields, such as a power dispatch system, smart grid system, energy management system, banking core system, or e-commerce platform. The embodiments of this application describe a specific application scenario in which the business system is an energy storage valve control system.

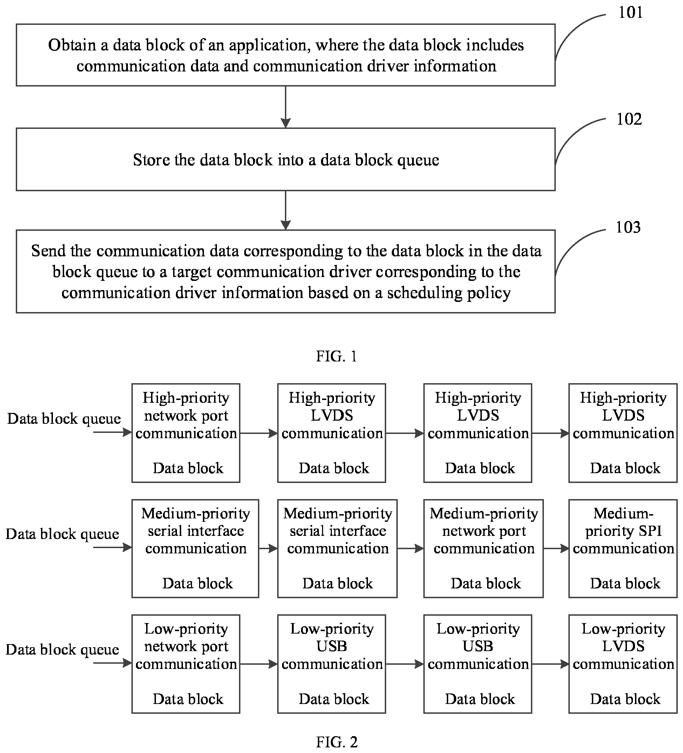

FIG. 1 is a schematic flowchart of a data communication method according to an embodiment of this application. As shown in FIG. 1, the method includes the following steps.

Step 101: Obtain a data block of an application, where the data block includes communication data and communication driver information.

Step 102: Store the data block into a data block queue.

Step 103: Send the communication data corresponding to the data block in the data block queue to a target communication driver corresponding to the communication driver information based on a scheduling policy.

In step 101, it can be understood that an entity executing the method described in this embodiment of this application may be a communication scheduling layer. To be specific, a communication scheduling layer is set up in the business system; and the communication scheduling layer is positioned between an application and a communication driver, primarily responsible for managing and allocating communication resources, that is, uniformly managing transmission of data generated by the applications and uniformly managing data received by the communication driver. The specific functions of the communication scheduling layer are described below. Certainly, the method according to this embodiment of this application may alternatively be implemented by other functional modules. For ease of description, the following embodiments are described with the communication scheduling layer in the business system as the execution entity.

Multiple applications within the business system need to communicate data with each other. Therefore, when an application needs to send communication data through a corresponding communication driver, it can assemble the generated communication data and a parameter related to the communication data, to obtain a data block. Thus, the data block may include communication data and communication driver information. The communication data refers to data sent through the communication driver. The communication driver information refers to information indicating the communication driver, such as a name or an ID of the communication driver. The purpose of including the communication driver information in the data block is to enable the communication scheduling layer to send the communication data to the corresponding communication driver.

In step 102, the data block queue is a first-in-first-out linear list. After receiving a data block, the communication scheduling layer may store the data block into the data block queue based on a time of receiving the data block sent by the application. It can be understood that there may be one or multiple data block queues.

In step 103, the scheduling policy refers to a policy used to determine a sending time of communication data corresponding to a data block in the data block queue, which can be preset based on actual conditions. The communication scheduling layer selects a data block to be sent from the data block queue based on the scheduling policy and sends communication data contained in the selected data block to a designated target communication driver.

In this embodiment of this application, to-be-transmitted data generated by the applications is stored into the data block queue in the form of data block for unified scheduling. Compared with existing solutions where applications directly communicate data with communication drivers and the communication drivers contend for CPU resources, in the method in the embodiments of this application, communication data corresponding to data blocks in the data block queue is orderly sent to corresponding target communication drivers based on the scheduling policy. This reduces instances where communication drivers contend for CPU resources based on their priorities, enabling timely processing of communication data, improving data transmission stability, and thereby improving system operation stability.

Based on the above embodiments, during storage of the data block into the data queue, the data block may be stored into a data queue of a corresponding priority based on priority information.

In a specific implementation process, during the generation of a data block by the application, the application may further specify priority information of the data block, where the priority information is used to determine an urgency degree of sending corresponding communication data. The priority information may include high priority, medium priority, and low priority, where a higher priority indicates that corresponding communication data needs to be sent sooner. It can be understood that the priority information may include more or fewer priority levels, which can be set based on actual conditions. Additionally, besides dividing priorities included in the priority information into high, medium, and low priorities, other division methods can be used as long as they can distinguish different priority levels. For example, numbers can be used to indicate different priorities, or English letters can be used, where similarly, different letters represent different priorities.

It can be understood that the communication scheduling layer may set a corresponding quantity of data queues based on priority information of data blocks. For example, if the priority information includes high priority, medium priority, and low priority, the communication scheduling layer may set three data queues: a high-priority data queue, a medium-priority data queue, and a low-priority data queue. The communication scheduling layer stores high-priority data blocks into the high-priority data queue, medium-priority data blocks into the medium-priority data queue, and low-priority data blocks into the low-priority data queue. FIG. 2 is a schematic diagram of a data queue structure according to an embodiment of this application, as shown in FIG. 2.

In the embodiments of this application, a data block is stored based on priority information, where a priority level of the data block is positively correlated with a time sensitivity of the data block. During data processing, data in the high-priority data block queue is processed first, enabling timely processing of high-priority communication data and improving system stability.

In another embodiment, the communication scheduling layer may further set data queues based on both priority information of data blocks and communication drivers. Specifically, for example, the priority information includes high priority, medium priority, and low priority; and the communication driver includes a serial interface communication driver, a network port communication driver, and a USB communication driver. The communication scheduling layer may set a high-priority data queue, medium-priority data queue, and low-priority data queue for the serial interface communication driver; a high-priority data queue, medium-priority data queue, and low-priority data queue for the network port communication driver; and a high-priority data queue, medium-priority data queue, and low-priority data queue for the USB communication driver.

In another embodiment, the communication scheduling layer may further set corresponding data queues based on the communication driver. For example, if the communication driver includes a serial interface communication driver, a network port communication driver, and a USB communication driver; the communication scheduling layer may set a data queue corresponding to the serial interface communication driver, a data queue corresponding to the network port communication driver, and a data queue corresponding to the USB communication driver.

Based on the above embodiments, the sending the communication data corresponding to the data block in the data block queue to a target communication driver corresponding to the communication driver information based on a scheduling policy includes:
obtaining the to-be-processed data block from a data queue based on a priority of the data queue; and
sending the communication data corresponding to the to-be-processed data block to the target communication driver corresponding to the communication driver information.

In a specific implementation, the priority of the data queue corresponds to the priority information of the data block stored into the data queue. To be specific, a high-priority data block is stored into a high-priority data queue, a medium-priority data block is stored into a medium-priority data queue, and a low-priority data block is stored into a low-priority data queue. The communication scheduling layer preferentially selects a data block from the high-priority data queue. If the high-priority data queue is not empty, it obtains a data block as the to-be-processed data block according to the first-in-first-out principle. If the high-priority data queue is empty, it obtains a data block from the medium-priority data queue. The same logic applies to the rest.

After obtaining the to-be-processed data block, the communication scheduling layer may parse the to-be-processed data block to obtain the communication data corresponding to the to-be-processed data block and the communication driver information. The communication scheduling layer determines the target communication driver based on the communication driver information and sends the communication data to the target communication driver.

In the embodiments of this application, the data blocks are processed based on the priorities of the data queues. Since higher priority indicates higher time sensitivity, high-priority data is processed first, improving the orderliness of data processing and thereby improving system operation stability.

Based on the above embodiments, the sending, by the communication scheduling layer, the communication data corresponding to the to-be-processed data block to the target communication driver corresponding to the communication driver information includes at least one of the following cases.
(1) If a working state of the target communication driver is an idle state, the communication data corresponding to the to-be-processed data block is sent to the target communication driver.
   In a specific implementation, the working state of the communication driver includes an idle state and a busy state, where the idle state indicates that the communication driver is not currently processing data transmission, and the busy state indicates that the communication driver is currently processing data transmission. When the communication driver is in the idle state, it can receive to-be-processed data. Therefore, after obtaining a to-be-processed data block from the data block queue, the communication scheduling layer parses the to-be-processed data block to obtain the corresponding communication driver information and communication data. Based on the communication driver information, a working state of a corresponding target communication driver is queried. If the working state is the idle state, the parsed communication data is sent to the target communication driver. The target communication driver sends the communication data after receiving the communication data.
(2) If the working state of the target communication driver is a busy state, the to-be-processed data block is returned to an original data queue, and a next to-be-processed data block is obtained from the data queue based on the priority of the data queue.

If a working state of a target communication driver corresponding to the next to-be-processed data block is the idle state, communication data corresponding to the next to-be-processed data block is sent to the target communication driver corresponding to the next to-be-processed data block.

In a specific implementation, if the communication scheduling layer determines that the working state of the target communication driver is the busy state based on the communication driver information, it indicates that the target communication driver is currently processing other data and cannot process the communication data in the to-be-processed data block. To improve a success rate of communication data sending and efficiency of processing data blocks in the data queue, the communication scheduling layer returns the to-be-processed data block to the original data queue. The original data queue refers to a data queue where the to-be-processed data block is located before being retrieved. For example, if the to-be-processed data block is obtained from a high-priority data queue by the communication scheduling layer, the to-be-processed data block is returned to the high-priority data queue. It can be understood that the to-be-processed data block may be placed at the tail or the head of the original data queue.

In a case where the data block is placed at the tail and the original data queue is a high-priority data queue, the communication scheduling layer may obtain a next to-be-processed data block based on the scheduling policy, in other words, determine whether there is another data block in the high-priority data queue. It should be understood that the another data block refers to a data block other than the returned data block. If there is another data block, the communication scheduling layer obtains the next to-be-processed data block from the head of the high-priority data queue. If there are no other data blocks in the high-priority data queue, the communication scheduling layer obtains the next to-be-processed data block from the head of a data queue of a second highest priority. Whether the working state of the target communication driver corresponding to the next to-be-processed data block is the idle state is checked according to the above process. If it is in the idle state, communication data in the next to-be-processed data block is sent to a communication driver corresponding to the next to-be-processed data block. If the working state of the communication driver corresponding to the next to-be-processed data block is still the busy state, it is processed according to the method described in the above embodiment.

In a case where the data block is placed at the head and the original data queue is a high-priority data queue, the communication scheduling layer may obtain a next to-be-processed data block based on the scheduling policy, in other words, determine whether there is another data block in the high-priority data queue. It should be understood that the another data block refers to a data block other than the returned data block. If there is another data block, the communication scheduling layer obtains the next to-be-processed data block from the head of the high-priority data queue, excluding the returned data block. If there are no other data blocks in the high-priority data queue, the communication scheduling layer obtains the next to-be-processed data block from the head of a data queue of a second highest priority. Whether the working state of the target communication driver corresponding to the next to-be-processed data block is the idle state is checked according to the above process. If it is in the idle state, communication data in the next to-be-processed data block is sent to the communication driver corresponding to the next to-be-processed data block. If the working state of the communication driver corresponding to the next to-be-processed data block is still the busy state, it is processed according to the method described in the above embodiment.

In the embodiments of this application, whether to send communication data to the target communication driver is determined based on the busy or idle state of the target communication driver. In this case, the communication data is temporarily not sent to a communication driver in a busy state, reducing a load on the communication driver and enabling an idle communication driver to receive to-be-processed data sooner, balancing loads of communication drivers and improving the success rate of communication data sending.

Based on the above embodiment, the sending the communication data corresponding to the to-be-processed data block to the target communication driver corresponding to the communication driver information includes:
calculating a cumulative duration for a sent data block in a data sending time segment corresponding to a current moment; where the data sending time segment is a time period for sending a data block obtained through pre-dividing time; and
if the cumulative duration is less than the data sending time segment corresponding to the current moment, sending, by communication scheduling layer, the communication data corresponding to the to-be-processed data block to the target communication driver corresponding to the communication driver information.

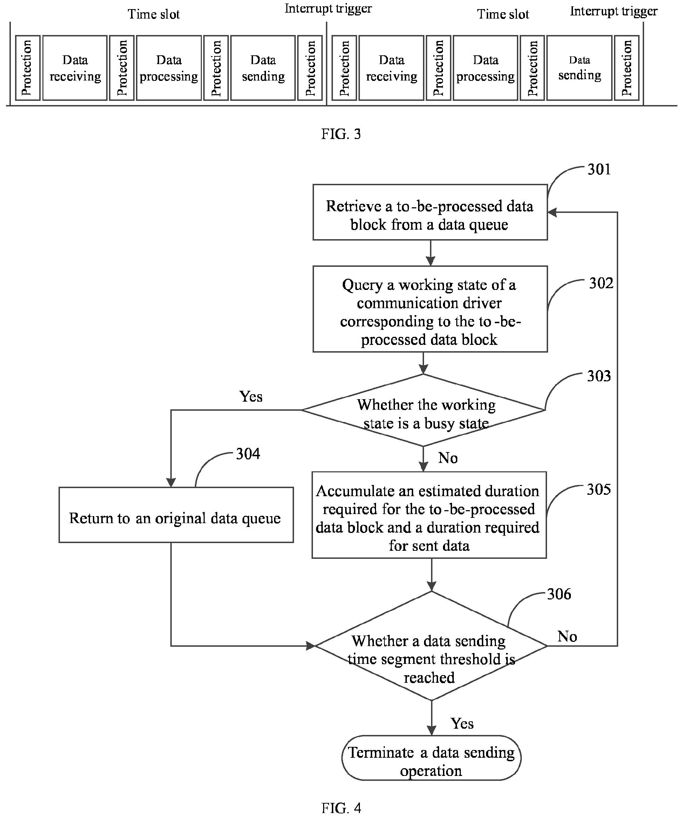

In a specific implementation, FIG. 3 is a schematic diagram of a time slot according to an embodiment of this application, as shown in FIG. 3. To improve system operation stability, time may be pre-divided to obtain multiple time slots, where each time slot includes corresponding action processing times. For example, a time slot may include a data receiving time segment, a data processing time segment, and a data sending time segment. That is, a time slot may be divided into a time period for data receiving, a time period for data processing, and a time period for data sending. It can be understood that the time slots may be microsecond-level time intervals, generated by high-precision devices (such as FPGA). A time slot may be 50 microseconds, with the FPGA generating an interrupt every 50 microseconds. It should be noted that a specific length of the time slot and the division of the time slots may be set based on actual conditions. For example, a 50-microsecond time slot may be divided into a data receiving time segment of 0 microseconds to 15 microseconds, a data processing time segment of 16 microseconds to 30 microseconds, and a data sending time segment of 31 microseconds to 50 microseconds.

For the data sending time segment, which is used for data sending, after obtaining the to-be-processed data block from the data queue, the communication scheduling layer calculates a sum of a duration required for a sent data block in a data sending time segment corresponding to a current moment and an estimated duration required to send the communication data corresponding to the to-be-processed data block, that is, a cumulative duration. The estimated duration may be estimated by the application based on a size of the communication data and a data transmission rate of the corresponding communication driver. If the cumulative duration is less than the data sending time segment corresponding to the current moment, it indicates that the communication data corresponding to the to-be-processed data block can be sent within the data sending time segment. Therefore, the communication scheduling layer sends the communication data corresponding to the to-be-processed data block to the corresponding target communication driver.

If the cumulative duration is greater than or equal to the data sending time segment corresponding to the current moment, it indicates that the communication data cannot be completely sent within the data sending time segment, so the data sending operation is terminated.

It can be understood that to reduce the impact of data processing timeout, protection time periods may be set before and after each data operation time segment. It can be understood that the protection time periods are included within the time slot, that is, a sum of all protection time periods and the time segments corresponding to the data operations equals one time slot. For example, if a time slot is 50 microseconds, with a protection time period set to 5 microseconds and a total of four protection time periods in one time slot, a data receiving time segment, data processing time segment, and data sending time segment are each 10 microseconds. It should be noted that the specific duration of the protection time periods and a time segment for each data operation may be preset.

In this embodiment of this application, a data receiving operation is performed in a data receiving time segment, data processing is performed in a data processing time segment, and data sending is performed in a data sending time segment, reducing the impact of the data transmission process on task execution and improving stability during data transmission. FIG. 4 is a schematic flowchart of a data sending method according to an embodiment of this application. As shown in FIG. 4, the method includes the following steps.

Step 301: Retrieve a to-be-processed data block from a data queue. A communication scheduling layer selects the data queue for obtaining the to-be-processed data block based on a priority, and in the selected data queue, retrieves the to-be-processed data block from the data queue based on a first-in-first-out principle.

Step 302: Query a working state of a communication driver corresponding to the to-be-processed data block. After obtaining the to-be-processed data block, the communication scheduling layer parses the to-be-processed data block to obtain communication data, communication driver information, and an estimated duration contained in the to-be-processed data block. The communication data is data sent to the communication driver and then sent by the communication driver; the communication driver information indicates a communication driver receiving the communication data, and the communication scheduling layer may determine a target communication driver based on the communication driver information; and the estimated duration is duration required to successfully send the communication data, calculated by an application based on the communication data and the target communication driver. After determining the target communication driver, the communication scheduling layer may query a working state of the target communication driver, where the working state includes an idle state and a busy state.

Step 303: Determine whether the working state is a busy state. If the working state is the busy state, step 304 is performed; otherwise, step 305 is performed.

Step 304: Return to an original data queue. The communication scheduling layer returns the to-be-processed data block to the original data queue. Specific operations are described in the above embodiments.

Step 305: Accumulate an estimated duration required for the to-be-processed data block and a duration required for sent data. The communication scheduling layer accumulates the estimated duration required for the to-be-processed data block and the duration required for sent data to obtain a cumulative duration.

Step 306: Determine whether a data sending time segment threshold is reached. Whether the cumulative duration is less than the data sending time segment threshold is determined. If it is less than the time segment threshold, the communication data in the to-be-processed data block is sent to the corresponding target communication data and step 301 is then performed; if it is not less than the time segment threshold, the data sending operation is terminated.

In this embodiment of this application, time is pre-divided to obtain multiple time segments. Corresponding operations are performed within different time segments, to distribute short-term transmission of multiple pieces of data or continuous burst communication data to multiple time segments, improving data transmission stability, and thereby improving system operation stability.

Based on the above embodiment, after the sending the communication data corresponding to the to-be-processed data block to the target communication driver corresponding to the communication driver information, the method further includes:
updating the duration required for sent data based on the estimated sending duration.

In a specific implementation, after sending the communication data in the to-be-processed data block to the target communication driver, the communication scheduling layer accumulates the estimated sending duration with the duration required for sent data to obtain a new duration required for sent data. It can be understood that a duration required for sent data before accumulation refers to a duration required for data sent before sending the communication data in the to-be-processed data block to the target communication driver.

In this embodiment of this application, since a size of the data sending time segment is fixed while a time required for sending a piece of communication data is not fixed, the cumulative duration for sent data can be tracked to facilitate determining whether to terminate the data sending operation.

Based on the above embodiment, the method further includes:
if a first data queue includes a target to-be-processed data block with a waiting duration greater than a preset waiting duration, migrating the target to-be-processed data block from the first data queue to a second data queue, where a priority of the first data queue is lower than a priority of the second data queue.

In a specific implementation, since the communication scheduling layer retrieves the to-be-processed data block from the queue based on a certain rule, such as selecting a data queue based on a priority and determining a to-be-processed data block based on a "first-in-first-out" rule, if high-priority data blocks frequently appear, data blocks in a low-priority data queue may remain unprocessed for a long time. To address this issue, in this embodiment of this application, a priority of a data block that is not processed for a long time is upgraded. Specifically, the communication scheduling layer can time a data block stored into a data queue to obtain a waiting duration of each data block. When a data queue (referred to as the first data queue in this embodiment of this application) contains a data block with a waiting duration greater than a preset waiting duration, namely, a target to-be-processed data block, the target to-be-processed data block is migrated from the first data queue to a second data queue. It should be noted that a priority of the first data queue is lower than a priority of the second data queue, for example, the first data queue may be a low-priority data queue, and the second data queue may be a medium-priority data queue or a high-priority data queue.

In this embodiment of this application, the priority of a data block that is not processed for a long time is upgraded, reducing a possibility that data remains unprocessed for a long time.

Based on the above embodiment, the method further includes:
obtaining to-be-received data from the communication driver and sending the to-be-received data to a corresponding application.

In a specific implementation, during data receiving, the communication scheduling layer may query each communication driver to check if there is to-be-received data. If a communication driver has to-be-received data, the communication scheduling layer retrieves the to-be-received data and sends the to-be-received data to a corresponding application. It can be understood that the communication scheduling layer may query each communication driver at a preset time interval.

To improve system operation stability, a system pre-divides time to obtain multiple time slots, where each time slot includes corresponding action processing times. For example, a time slot may include a data receiving time segment, a data processing time segment, and a data sending time segment. That is, a time slot may be divided into a data receiving time period, a data processing time period, and a data sending time period. It can be understood that the time slots may be microsecond-level time intervals, generated by high-precision devices (such as FPGA). A time slot may be 50 microseconds, with the FPGA generating an interrupt every 50 microseconds. It should be noted that a specific length of the time slot and the division of the time slot may be set based on actual conditions. For example, a 50-microsecond time slot may be divided into a data receiving time segment of 0 microseconds to 15 microseconds, a data processing time segment of 16 microseconds to 30 microseconds, and a data sending time segment of 31 microseconds to 50 microseconds.

For the data receiving time segment, the communication scheduling layer polls communication drivers to retrieve to-be-received data.

In this embodiment of this application, the communication scheduling layer periodically receives data, and sends the received data to a corresponding application. In this embodiment of this application, the impact on task execution is reduced, compared with existing solutions in which an interrupt occurs for data receiving whenever data is available.

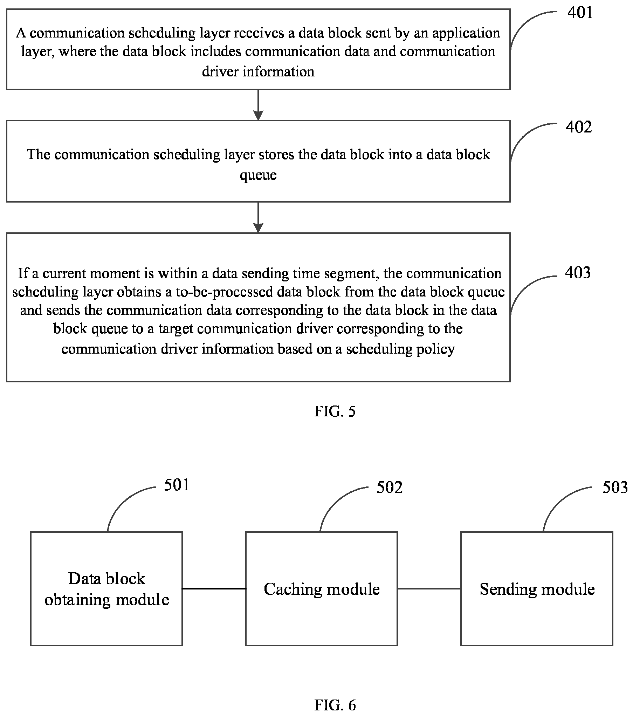

FIG. 5 is a schematic flowchart of another data communication method according to an embodiment of this application. As shown in FIG. 5, the method includes the following steps.

Step 401: A communication scheduling layer receives a data block sent by an application layer, where the data block includes communication data and communication driver information. It can be understood that the data block may further include other information, such as a size of the communication data, estimated sending duration, and priority information.

Step 402: The communication scheduling layer stores the data block into a data block queue. For a single data block queue, the data block is stored at a tail of the data queue. For multiple data queues with different priorities, the data block is stored into a data queue of a corresponding priority based on the priority information of the data block.

Step 403: If a current moment is within a data sending time segment, the communication scheduling layer obtains a to-be-processed data block from the data block queue and sends the communication data corresponding to the data block in the data block queue to a target communication driver corresponding to the communication driver information based on a scheduling policy; where the data sending time segment is a time period for sending a data block obtained through pre-dividing time. It can be understood that for the scheduling policy, reference may be made to the above embodiments and is not repeated herein.

In this embodiment of this application, the communication scheduling layer uniformly schedules to-be-transmitted data generated by applications, improving data transmission stability and thereby improving system operation stability.

FIG. 6 is a schematic structural diagram of a data communication apparatus according to an embodiment of this application. The apparatus may be a module, program segment, or code on an electronic device. It should be understood that the apparatus corresponds to the method embodiment of FIG. 1 and can perform the steps involved in the method embodiment of FIG. 1. For the specific functions of the apparatus, reference can be made to the descriptions above, and the detailed descriptions are appropriately omitted herein to avoid repetition. The apparatus includes: a data block obtaining module 501, a caching module 502, and a sending module 503.

The data block obtaining module 501 is configured to obtain a data block of an application, where the data block includes communication data and communication driver information.

The caching module 502 is configured to store the data block into a data block queue.

The sending module 503 is configured to send the data block corresponding to the data block in the data block queue to a target communication driver corresponding to the communication driver information based on a scheduling policy.

Based on the above embodiments, the caching module 502 is specifically configured to:
store the data block into a data queue of a corresponding priority based on the priority information.

Based on the above embodiments, the sending module 503 is specifically configured to:
obtain a to-be-processed data block from the data queue based on the priority of the data queue; and
send the communication data corresponding to the to-be-processed data block to the target communication driver corresponding to the communication driver information.

Based on the above embodiments, the sending module 503 is specifically configured to:
if a working state of the target communication driver is an idle state, send the communication data corresponding to the to-be-processed data block to the target communication driver; and/or
if the working state of the target communication driver is a busy state, return the to-be-processed data block to an original data queue, and obtain a next to-be-processed data block from the data queue based on the priority of the data queue; and
if a working state of a target communication driver corresponding to the next to-be-processed data block is an idle state, send communication data corresponding to the next to-be-processed data block to the target communication driver corresponding to the next to-be-processed data block.

Based on the above embodiments, the sending module 503 is specifically configured to:
calculate a cumulative duration of a duration required for a sent data block in a data sending time segment corresponding to a current moment and an estimated duration required for the to-be-processed data block; where the data sending time segment is a time period for sending a data block obtained through pre-dividing time; and
if the cumulative duration is less than the data sending time segment corresponding to the current moment, send the communication data corresponding to the to-be-processed data block to the target communication driver corresponding to the communication driver information.

Based on the above embodiments, the apparatus further includes an update module, configured to:
update the duration required for sent data based on the estimated sending duration.

Based on the above embodiments, the apparatus further includes a time segment division module, configured to:
pre-set a time slot for triggering an interrupt, where the time slot is a time interval between two consecutive interrupts; and
divide the time slot according to a preset division rule to obtain multiple time sub-slots, where different time sub-slots are used to perform different data operations.

Based on the above embodiments, the time sub-slots include: a data receiving time segment, a data processing time segment, and a data sending time segment.

Based on the above embodiments, protection time periods are set before and after the data receiving time segment, the data processing time segment, and the data sending time segment.

Based on the above embodiments, the apparatus further includes a migration module, configured to:
if a first data queue has a target to-be-processed data block with a waiting duration greater than a preset waiting duration, migrate the target to-be-processed data block from the first data queue to a second data queue, where a priority of the first data queue is lower than a priority of the second data queue.

Based on the above embodiments, the apparatus further includes a data receiving module, configured to:
obtain to-be-received data from the communication driver and send the to-be-received data to a corresponding application.

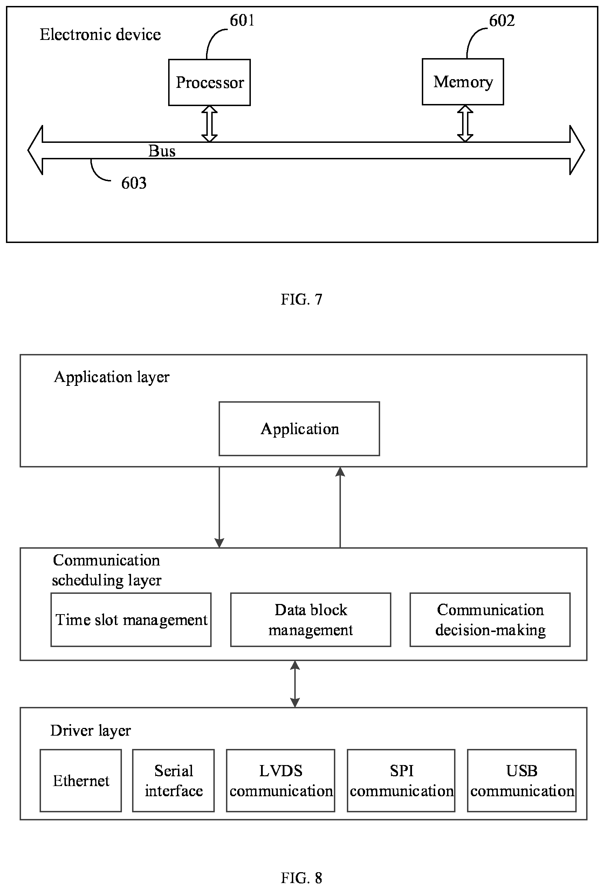

FIG. 7 is a schematic structural diagram of an electronic device entity according to an embodiment of this application. As shown in FIG. 7, the electronic device includes: a processor (processor) 601, a memory (memory) 602, and a bus 603.

The processor 601 and the memory 602 communicate with each other through the bus 603.

The processor 601 is configured to invoke program instructions in the memory 602 to perform the methods provided in the above method embodiments, for example, including: obtaining a data block of an application, where the data block includes communication data and communication driver information; storing the data block into a data block queue; and sending the communication data corresponding to the data block in the data block queue to a target communication driver corresponding to the communication driver information based on a scheduling policy.

The processor 601 may be an integrated circuit chip with a signal processing capability. The processor 601 may be a general-purpose processor, including a central processing unit (Central Processing Unit, CPU), a network processor (Network Processor, NP), or the like; or may be a digital signal processor (DSP), an application-specific integrated circuit (ASIC), a field-programmable gate array (FPGA) or another programmable logic device, a discrete gate or a transistor logic device, or a discrete hardware component. It can implement or execute the various methods, steps, and logic block diagrams disclosed in the embodiments of this application. The general-purpose processor may be a microprocessor, or the processor may be any conventional processor or the like.

The memory 602 may include, but is not limited to, random access memory (Random Access Memory, RAM), read only memory (Read Only Memory, ROM), programmable read-only memory (Programmable Read-Only Memory, PROM), erasable programmable read-only memory (Erasable Programmable Read-Only Memory, EPROM), electrically erasable programmable read-only memory (Electrically Erasable Programmable Read-Only Memory, EEPROM), and the like.

This embodiment discloses a computer program product, where the computer program product includes a computer program stored on a non-transitory computer-readable storage medium, and the computer program includes program instructions. When the program instructions are executed by a computer, the computer is enabled to perform the methods provided in the above method embodiments, for example, including: obtaining a data block of an application, where the data block includes communication data and communication driver information; storing the data block into a data block queue; and sending the communication data corresponding to the data block in the data block queue to a target communication driver corresponding to the communication driver information based on a scheduling policy.

This embodiment provides a non-transitory computer-readable storage medium, where the non-transitory computer-readable storage medium stores computer instructions. The computer instructions enable the computer to perform the methods provided in the above method embodiments, for example, including: obtaining a data block of an application, where the data block includes communication data and communication driver information; storing the data block into a data block queue; and sending the communication data corresponding to the data block in the data block queue to a target communication driver corresponding to the communication driver information based on a scheduling policy.

FIG. 8 is a schematic structural diagram of a data communication system according to an embodiment of this application. As shown in FIG. 8, the system includes an application layer, a communication scheduling layer, and a driver layer.

The application layer includes an application, and the application is configured to generate a data block and send the data block to the communication scheduling layer.

The communication scheduling layer is primarily responsible for time segment management, data block management, and communication decision-making. The time segment management is used for the communication scheduling layer to perform corresponding actions in corresponding time segments. Data block management is used to receive a data block sent by the application layer and cache the data block. Communication decision-making is used for the communication scheduling layer to retrieve a to-be-processed data block from a data queue based on a certain rule and send the communication data in the to-be-processed data block to a corresponding target communication driver.

The driver layer includes a communication driver, and the communication driver is configured to receive communication data sent by the communication scheduling layer and send the communication data. It can be understood that the communication driver includes, but is not limited to, an Ethernet driver, a serial interface driver, a low-voltage differential signaling (Low-Voltage Differential Signaling, LVDS) communication driver, a serial peripheral interface (Serial Peripheral interface, SPI) communication driver, and a USB communication driver.

In the embodiments of this application, by introducing a communication scheduling layer in a data communication system, the communication scheduling layer uniformly manages the transmission of data generated by applications, thereby reducing the negative impact of short-term high data volume transmission on system operation.

In the embodiments provided in this application, it should be understood that the disclosed apparatus and method may be implemented in other ways. The apparatus embodiments described above are merely illustrative, for example, the division of units is merely a logical function division, and there may be other division methods in actual implementation. For another example, multiple units or components may be combined or integrated into another system, or some features may be omitted or not implemented. Additionally, the shown or discussed coupling or direct coupling or communication connection may be through some communication interfaces, and the indirect coupling or communication connection of apparatuses or units may be electrical, mechanical, or in other forms.

Additionally, units described as separate components may or may not be physically separate, and components shown as units may or may not be physical units, that is, they may be located in one place or distributed across multiple network units. Some or all of the units may be selected based on actual needs to achieve the objectives of the solutions of the embodiments.

Furthermore, the functional modules in the various embodiments of this application may be integrated to form a single part, or each module may exist independently, or two or more modules may be integrated to form a single part.

In this document, relational terms such as first and second are used solely to distinguish one entity or operation from another, without necessarily requiring or implying any actual relationship or order between such entities or operations.

The above descriptions are only embodiments of this application and are not intended to limit the protection scope of this application. For those skilled in the art, various modifications and changes can be made to this application. Any modifications, equivalent substitutions, improvements, and the like made within the spirit and principles of this application shall be included within the protection scope of this application.

## Claims

1. A data communication method, comprising:
obtaining a data block of an application, wherein the data block comprises communication data and communication driver information;
storing the data block into a data block queue; and
sending the communication data corresponding to the data block in the data block queue to a target communication driver corresponding to the communication driver information based on a scheduling policy.

2. The method according to claim 1, wherein the storing the data block into a data block queue comprises:
storing the data block into a data queue of a corresponding priority based on priority information.

3. The method according to claim 2, wherein the sending the communication data corresponding to the data block in the data block queue to a target communication driver corresponding to the communication driver information based on a scheduling policy comprises:
obtaining a to-be-processed data block from the data queue based on the priority of the data queue; and
sending the communication data corresponding to the to-be-processed data block to the target communication driver corresponding to the communication driver information.

4. The method according to claim 3, wherein the sending the communication data corresponding to the to-be-processed data block to the target communication driver corresponding to the communication driver information comprises:
if a working state of the target communication driver is an idle state, sending the communication data corresponding to the to-be-processed data block to the target communication driver; and/or
if the working state of the target communication driver is a busy state, returning the to-be-processed data block to an original data queue, and obtaining a next to-be-processed data block from the data queue based on the priority of the data queue; and
if a working state of a target communication driver corresponding to the next to-be-processed data block is an idle state, sending communication data corresponding to the next to-be-processed data block to the target communication driver corresponding to the next to-be-processed data block.

5. The method according to claim 3, wherein the sending the communication data corresponding to the to-be-processed data block to the target communication driver corresponding to the communication driver information comprises:
calculating a cumulative duration of a duration required for a sent data block in a data sending time segment corresponding to a current moment and an estimated sending duration required for the to-be-processed data block; wherein the data sending time segment is a time period for sending a data block obtained through pre-dividing time; and
if the cumulative duration is less than the data sending time segment corresponding to the current moment, sending the communication data corresponding to the to-be-processed data block to the target communication driver corresponding to the communication driver information.

6. The method according to claim 5, wherein after the sending the communication data corresponding to the to-be-processed data block to the target communication driver corresponding to the communication driver information, the method further comprises:
updating the duration required for sent data based on the estimated sending duration.

7. The method according to claim 5 or 6, wherein the method further comprises:
pre-setting a time slot for triggering an interrupt, wherein the time slot is a time interval between two consecutive interrupts; and
dividing the time slot according to a preset division rule to obtain multiple time sub-slots, wherein different time sub-slots are used to perform different data operations.

8. The method according to claim 7, wherein the time sub-slots comprise: a data receiving time segment, a data processing time segment, and a data sending time segment.

9. The method according to claim 8, wherein protection time periods are set before and after the data receiving time segment, the data processing time segment, and the data sending time segment.

10. The method according to any one of claims 2 to 9, wherein the method further comprises:
if a first data queue has a target to-be-processed data block with a waiting duration greater than a preset waiting duration, migrating the target to-be-processed data block from the first data queue to a second data queue, wherein a priority of the first data queue is lower than a priority of the second data queue.

11. The method according to any one of claims 1 to 10, wherein the method further comprises:
obtaining to-be-received data from the communication driver and sending the to-be-received data to a corresponding application.

12. A data communication method, wherein the method further comprises:
receiving a data block sent by an application layer, wherein the data block comprises communication data and communication driver information;
storing the data block into a data block queue; and
if a current moment is within a data sending time segment, obtaining a to-be-processed data block from the data block queue, and sending the communication data corresponding to the data block in the data block queue to a target communication driver corresponding to the communication driver information based on a scheduling policy; wherein the data sending time segment is a time period for sending a data block obtained through pre-dividing time.

13. A data communication apparatus, comprising:
a data block obtaining module, configured to obtain a data block of an application, wherein the data block comprises communication data and communication driver information;
a caching module, configured to store the data block into a data block queue; and
a sending module, configured to send the data block corresponding to the data block in the data block queue to a target communication driver corresponding to the communication driver information based on a scheduling policy.

14. An electronic device, comprising: a processor, a memory, and a bus, wherein
the processor and the memory communicate with each other through the bus; and
the memory stores program instructions executable by the processor, and the processor invokes the program instructions to perform the method according to any one of claims 1 to 12.

15. A non-transitory computer-readable storage medium, wherein the non-transitory computer-readable storage medium stores computer instructions, and when the computer instructions are executed by a computer, the computer is enabled to perform the method according to any one of claims 1 to 12.

16. A data communication system, comprising an application layer, a communication scheduling layer, and a driver layer; wherein
the application layer comprises an application, wherein the application is configured to generate a data block and send the data block to the communication scheduling layer;
the communication scheduling layer is configured to perform the method according to any one of claims 1 to 9; and
the driver layer comprises a communication driver, wherein the communication driver is configured to receive communication data sent by the communication scheduling layer and send the communication data.
